# EUROPÄISCHE PATENTSCHRIFT

(11) **EP 2 652 862 B1**
(45) Veröffentlichungstag und Bekanntmachung des Hinweises auf die Patenterteilung: **06.07.2016**
(21) Anmeldenummer: 11784644.4
(22) Anmeldetag: 15.11.2011
(51) Int. Cl.: H02K 1/27

(54) **MASCHINENKOMPONENTE FÜR EINE ELEKTRISCHE MASCHINE**
MACHINE COMPONENT FOR AN ELECTRICAL MACHINE
ÉLÉMENT DE MACHINE DESTINÉ À UNE MACHINE ÉLECTRIQUE

(30) Priorität: 14.12.2010 DE 102010062981
(43) Veröffentlichungstag der Anmeldung: 23.10.2013
(73) Patentinhaber: Robert Bosch GmbH, 70442 Stuttgart (DE)
(72) Erfinder: FEUERROHR, Lin, 71277 Rutesheim (DE)
(86) Internationale Anmeldenummer: PCT/EP2011/070181
(87) Internationale Veröffentlichungsnummer: WO 2012/079892

(56) Entgegenhaltungen:
- DE-A1- 19 915 664
- DE-A1-102008 032 844
- US-A- 4 469 970
- US-A- 5 829 120
- US-A1- 2009 230 803

## Beschreibung

### Technisches Gebiet

Die Erfindung betrifft elektrische Maschinen, insbesondere elektrische Maschinen mit permanentmagneterregten Läufern.

### Stand der Technik

Gängige rotatorische elektrische Maschinen weisen in der Regel einen kreiszylindrischen Außenstator zum Erzeugen eines Motormagnetfelds und einen im Inneren des Stators drehbar gelagerten Läufer zum Erzeugen eines Erregermagnetfelds auf. Ein solcher Läufer einer elektrischen Maschine umfasst mehrere magnetische Pole, die z. B. bei Synchronmaschinen durch die Magnetfelder von Permanentmagneten ausgebildet werden.

Die Permanentmagneten können in dem Läufer in Sammler- oder Speichenanordnung angeordnet sein. Bei der Speichenanordnung sind die Permanentmagnete so angeordnet, dass ihre Magnetfeldrichtungen in tangentialer Richtung ausgerichtet sind. Die Speichenanordnung ermöglicht es im Allgemeinen, den Bauraum des Läufers gut auszunutzen und eine Maschine mit hoher Leistungsdichte zu schaffen. Dies ist insbesondere für dynamische Antriebe vorteilhaft, da Läufer im Speichen- oder Sammleraufbau eine besonders geringe Trägheit haben können. Dies ist insbesondere beim Einsatz derartiger elektrischer Maschinen als Lenkungsmotoren, Schaltmotoren, Kupplungssteller, Turboverdichter in Kraftfahrzeugen und dergleichen vorteilhaft.

Maschinenkomponenten mit Sammler- oder Speichenanordnungen der Permanentmagnete sind allgemein bekannt. Um die radial angeordneten Permanentmagnete in der Maschinenkomponente bei rotatorischen elektrischen Maschinen auch gegen etwaige Zentrifugalkräfte zu halten, sind Stege vorgesehen, die zwischen den Polenden angeordnet sind, um den Permanentmagneten in der Maschinenkomponente zu fixieren. Insbesondere wird so verhindert, dass die Permanentmagnete in den Luftspalt zwischen Stator und Läufer gelangen können. Die Stege sind zwischen den Polenden angeordnet und erzeugen aufgrund des durch sie bewirkten magnetischen Schlusses erhebliche Flussverluste.

Häufig werden elektrische Maschinen mit besonders geringen Rastmomenten benötigt. Diese können durch eine geeignete Polkontur der Pole des Läufers, wie beispielsweise durch eine Richter-, Sinus- oder Evans-Kontur oder dergleichen, erreicht werden. Diese Konturen zeichnen sich dadurch aus, dass sie einen Luftspalt zwischen dem Stator und dem Läuferpol vorsehen, der sich von der Mitte der Pole der Läufer nach außen hin vergrößert. Bei rotatorischen Maschinen mit Innenläufer bedeutet dies, dass der Radius (Abstand von der Läuferachse) des Läufers im Bereich der Mitte des Pols des Läufers größer ist als der Radius an einem Polrand des jeweiligen Läuferpols.

Bei Läufern mit Speichenanordnung sind die Permanentmagnete zwischen den Polen angeordnet, so dass der Steg zum Halten der Permanentmagnete in der Regel im Bereich zwischen benachbarten Polrändern angeordnet ist, wodurch die maximale Magnetlänge des Permanentmagneten in radialer Richtung reduziert wird. Die Polkonturen haben insbesondere bei Läufern mit Speichenanordnung der Permanentmagnete den Nachteil, dass sich durch die Polkonturen der Radius des Läufers an den Speichen verkleinert und der Permanentmagnet, der dort angeordnet sein soll, daher bezüglich des größten Radius im Bereich der Polmitte des Läufers verkürzt ist. Dadurch wird der maximale magnetische Fluss in dem Läufer beschränkt.

DE 199 15 664 A1, sowie US 5 829 120 A zeigen solche Läufer mit Speichenanordnung.

Es ist daher Aufgabe der vorliegenden Erfindung, eine Maschinenkomponente für die Aufnahme von Permanentmagneten zur Verfügung zu stellen, die einen vergrößerten Bereich zum Anordnen von Permanentmagneten aufweist.

### Offenbarung der Erfindung

Diese Aufgabe wird durch die Maschinenkomponente gemäß Anspruch 1 sowie durch die elektrische Maschine gemäß dem nebengeordneten Anspruch gelöst.

Weitere vorteilhafte Ausgestaltungen der vorliegenden Erfindung sind in den abhängigen Ansprüchen angegeben.

Gemäß einem ersten Aspekt ist eine Maschinenkomponente für eine elektrische Maschine vorgesehen, wobei die Maschinenkomponente einen Komponentenkörper mit benachbarten Polbereichen aufweist, die jeweils eine Polkontur aufweisen. Die Polkontur erstreckt sich in einer ersten (tangentialen) Richtung zwischen zwei Polrändern, die der Richtung der Anordnung der benachbarten Polbereiche entspricht, und Konturen aufweist, die sich in einer zweiten dazu im Wesentlichen senkrechten (radialen) Richtung erstrecken. Zwischen den benachbarten Polbereichen sind ein oder mehrere Halteelemente zum Halten eines Permanentmagneten vorgesehen, die von mindestens einem der einander zugewandten Polränder der benachbarten Polbereiche in der zweiten Richtung abstehen.

Eine Idee der obigen Maschinenkomponente besteht darin, bei Maschinenkomponenten mit Polbereichen, die Polkonturen aufweisen, den Bauraum zur Aufnahme eines Permanentmagneten im Inneren der Maschinenkomponente zu vergrößern. Dies wird dadurch erreicht, dass bei einer Polkontur mit einer Erstreckung in einer ersten Richtung und einem Hervorstehen der Kontur in einer zweiten Richtung ein oder mehrere Haltelemente zwischen den Polrändern von zwei benachbarten Polbereichen angeordnet ist. Das Haltelement steht in der zweiten Richtung über die direkte Linie zwischen den Polrändern benachbarter Polbereiche über. Dadurch ist es möglich, Permanentmagnete, insbesondere Speichenmagnete, so anzuordnen, dass deren dem Polrand zugeordnetes Ende mit der direkten Linie zwischen den Polrändern benachbarter Polbereiche abschließt oder die direkte Linie zwischen den Polrändern benachbarter Polbereiche überschreitet.

Bei bisherigen Ausführungsformen setzte das Haltelement zum Halten des Permanentmagneten in der Maschinenkomponente an dem Polrand an, so dass aufgrund der Breite (in zweiter Richtung) des Haltelements der verfügbare Bauraum zum Einsetzen des Permanentmagneten verringert war.

Weiterhin weist der Komponentenkörper eine Tasche zur Aufnahme eines Permanentmagneten auf wobei die Tasche durch das eine oder die mehreren Halteelemente begrenzt ist.

Erfindungsgemäß kann die Tasche zur Aufnahme des Permanentmagneten in der zweiten Richtung zwischen den benachbarten Polbereichen oder in der ersten Richtung innerhalb des Polbereichs angeordnet sein.

Insbesondere ist die Tasche mit einem Permanentmagneten versehen wobei eine Kante des Permanentmagneten an dem einen oder den mehreren Haltelementen anliegt.

Es kann vorgesehen sein, dass der Komponentenkörper aus Lamellenblechen mit einem ersten und einem zweiten Blechschnitt zusammengesetzt ist, wobei das Lamellenblech mit dem zweiten Blechschnitt eine Polstruktur zum Bilden des Polbereichs mit der entsprechenden Polkontur aufweist, wobei die Lamellenbleche mit dem ersten Blechschnitt benachbarte Polstrukturen aufweisen, zwischen denen eine Struktur zum Bilden der einen oder der mehreren Halteelemente vorgesehen ist.

Weiterhin kann das Halteelement des Lamellenblechs mit dem zweiten Blechschnitt als Steg zwischen den die Polbereiche bildenden Polstrukturen ausgebildet sein. Insbesondere kann an dem Steg ein in Richtung der Tasche abstehendes Rastelement vorgesehen sein, das es ermöglicht, den Permanentmagneten zu klemmen und verrutschsicher in Position zu halten.

Gemäß einer weiteren Ausführungsform können die Halteelemente des Lamellenblechs mit dem zweiten Blechschnitt als Rastnasen an den einander zugewandten Polrändern benachbarter die Polbereiche bildender Polstrukturen ausgebildet sein. Durch das Unterbrechen des Haltelements in der ersten Richtung kann der magnetische Fluss zwischen den Polen verringert werden.

Es kann vorgesehen sein, dass die Maschinenkomponente einem Läufer einer elektrischen Maschine, insbesondere einem Rotor einer Innenläufermaschine, entspricht.

Gemäß einem weiteren Aspekt ist eine elektrische Maschine mit der obigen Maschinenkomponente vorgesehen.

### Kurzbeschreibung der Zeichnungen

Bevorzugte Ausführungsformen der vorliegenden Erfindung werden nachfolgend anhand der beigefügten Zeichnungen näher erläutert. Es zeigen:
- Figur 1: eine beispielhafte Darstellung eines Querschnitts einer permanentmagneterregten elektrischen Maschine mit Innenläuferrotor;
- Figuren 2a und 2b: beispielhafte Darstellungen von zwei Blechschnitten von Lamellenblechen zum Aufbau eines Rotors für eine permanentmagneterregte elektrische Innenläufermaschine, jeweils in verschiedenen Ausschnitten;
- Figuren 3a und 3b: Darstellungen von zwei Blechschnitten von Lamellenblechen zum Aufbau eines Rotors für eine permanentmagneterregte elektrische Innenläufermaschine mit einem nach außen versetzten Steg;
- Figuren 4a und 4b: Darstellungen von zwei Blechschnitten von Lamellenblechen zum Aufbau eines Rotors für eine permanentmagneterregte elektrische Innenläufermaschine, bei der die Permanentmagnete über den Polrand der Polkontur überstehen;
- Figuren 5a und 5b: Darstellungen von zwei Blechschnitten von Lamellenblechen zum Aufbau eines Rotors für eine permanentmagneterregte elektrische Innenläufermaschine mit einem nach außen versetzten Steg, der mit einem zum Permanentmagneten gerichteten Rastelement versehen ist;
- Figur 6: Darstellung eines ersten Blechschnittes eines Lamellenblechs zum Aufbau eines Rotors für eine permanentmagneterregte elektrische Innenläufermaschine mit Rastnasen zum Halten des Permanentmagneten; und
- Figuren 7a und 7b: Darstellung von Blechschnitten von Lamellenblechen zum Aufbau eines Rotors für eine permanentmagneterregte elektrische Innenläufermaschine mit tangential angeordneten Permanentmagneten.

### Beschreibung von Ausführungsformen

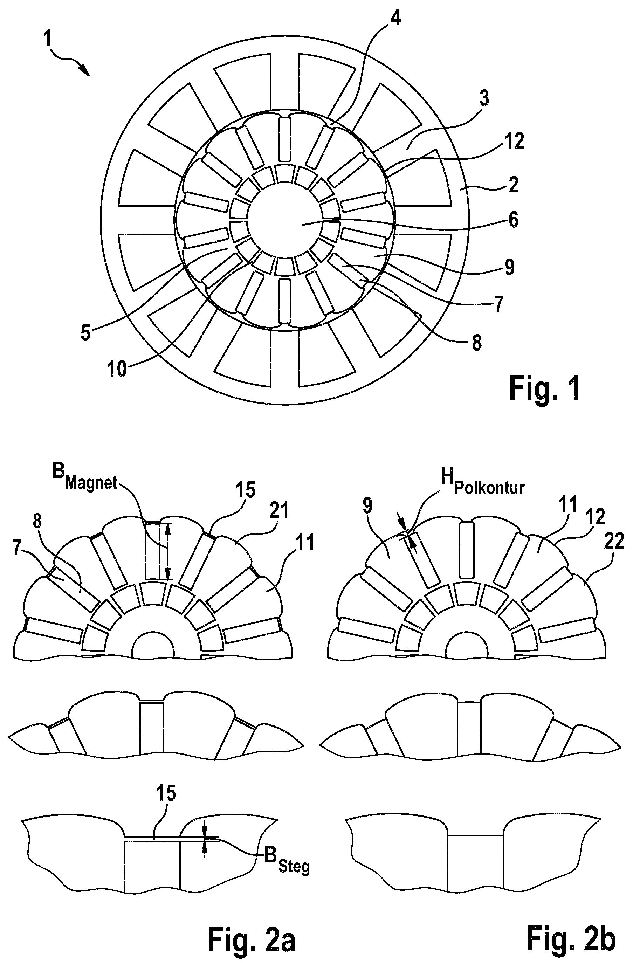

Figur 1 zeigt eine schematische Darstellung eines Querschnitts durch eine rotatorische elektrische Innenläufermaschine 1 mit einer im Wesentlichen kreiszylindrischen Statoranordnung 2, die in ihrem Inneren nach innen weisende Statorzähne 3 aufweist. Die Statorzähne 3 sind mit Statorspulen umwickelt (nicht gezeigt), so dass in dem Inneren der Statoranordnung 2 durch geeignete Bestromung der Statorspulen ein Magnetfeld ausgebildet werden kann. Die Statorzähne 3 enden an einem Außenradius einer kreiszylindrischen Innenausnehmung 4, in der ein Rotor 5 angeordnet ist.

Der Rotor 5 ist an einer drehbaren Welle 6 angebracht. Der Rotor 5 weist Taschen 7 zur Aufnahme von Permanentmagneten 8 auf. Die Taschen 7 sind angeordnet, um die Permanentmagnete in Speichenanordnung aufzunehmen.

Zwischen den Permanentmagneten 8 sind Rotorpolbereiche 9 ausgebildet, die über einen Haltesteg 10 oder in sonstiger Weise mit der Welle 6 verbunden und durch diese gehalten sind. Der Haltesteg 10 weist einen bezüglich des betreffenden Rotorpolbereichs 9 verringerten Querschnitt auf, um den Anteil des magnetischen Flusses über die Welle 6 des Rotors 5 zu reduzieren.

Die Rotorpolbereiche 9 stellen einen magnetisch gut leitfähigen Bereich dar, der an die Magnetpole der Permanentmagnete 8 angrenzt und in der Lage ist, den magentischen Fluss zu bündeln und über die Rotorpole, insbesondere über die Polkonturen der Rotorpole in einen Außenbereich des Rotors 5, insbesondere in Richtung des Stators 2 abzugeben. An dem den Statorzähnen 3 zugewandten Ende der Rotorpolbereiche 9 weisen die Rotorpole eine Polkontur 12 auf, die entsprechend einer Richter-Kontur, einer Sinuskontur oder einer Evans-Kontur ausgebildet sein kann. Die Rotorpole sind (in tangentialer Richtung) benachbart zueinander angeordnet und bilden im Wesentlichen Segmente des kreiszylinderförmigen Rotors. Die Polkonturen erstrecken sich in radialer Richtung zum Stator hin. Die Polkonturen weisen zwei Polränder auf, die die gegenüberliegenden Enden der Polkonturen in tangentialer Richtung darstellen. Mit anderen Worten die Polkontur eines Rotorpolbereichs 9 endet an dem jeweiligen Polrand.

Charakteristisch für eine derartige Polkontur 12 ist, dass die Polhöhe H_{Pol}, d. h. der Abstand des dem Stator zugewandten Außenrandes des Rotorpolbereichs 9 von der Rotorachse, in einem Bereich der Polmitte (bezüglich der tangentialen Richtung) größer ist als die Polhöhe H_{Pol} an den Polrändern. Für den Innenläuferrotor 5 der elektrischen Maschine der Figur 1 bedeutet dies, dass der Abstand von der Rotorachse zur Außenkante in der Polmitte größer ist als am Polrand und somit der Luftspalt, der sich zwischen den Rotorpolen 12 und den inneren Enden der Statorzähne 3 ausbildet, im Bereich der jeweiligen Polmitte am geringsten ist und zu den Polrändern hin zunimmt.

In den Figuren 2a und 2b sind zwei verschiedene Blechschnitte 21, 22 für Lamellenbleche zum Aufbau eines Innenläuferrotors 5 dargestellt. Die Blechschnitte 21, 22 können in beliebiger Abfolge und Anzahl aufeinander gestapelt werden und beispielsweise durch Stanzpaketieren, Kleben, Backlack, Schweißen, Klemmen und dergleichen miteinander verbunden werden. Das Verbinden erfolgt bei Maschinen ohne Schrägung so, dass die Taschen 7 zur Aufnahme der Permanentmagnete 8 in axialer Richtung übereinander angeordnet sein können, so dass jeweils ein Permanentmagnet 8 einsetzbar ist.

Die Blechschnitte sehen jeweils eine Rotorpolstruktur 11 vor, die eine bestimmte Polkonturhöhe H_{Polkontur} aufweist. Die Rotorpolstrukturen 11 werden zum Aufbau des Rotors 5 aufeinander gestapelt, um die Rotorpolbereiche 9 auszubilden. Der erste Blechschnitt 21 der Figur 2a sieht Stege 15 jeweils zwischen benachbarten Rotorpolstrukturen 11 vor, die für die mechanische Stabilität des damit aufgebauten Rotors notwendig sind, da sich im dynamischen Verhalten der elektrischen Maschine die durch die Polstrukturen 9 gebildeten Rotorpole 12 in tangentialer Richtung verschieben können. Die Stege 15 dienen zum Verbinden der Polkonturen und sind nicht Teil der Polkontur. Die Stege 15 dienen weiterhin als Halteelemente für die in den Taschen 7 angeordneten Permanentmagnete. Mit anderen Worten begrenzen die Stege 15 die Taschen 7 in Richtung zum Stator hin und verhindern, dass die Permanentmagnete aus den Taschen 7 in den Luftspalt zwischen Stator 2 und Rotor 5 gelangen können.

Um den magnetischen Fluss durch die Stege 15 zwischen benachbarten Rotorpolbereichen 9 zu verringern, werden die Lamellenbleche des ersten Blechschnitts 21 mit Lamellenblechen mit dem in Figur 2b gezeigten Blechschnitt so aufeinander gestapelt, dass nur einige der Lamellenbleche den ersten Blechschnitt 21 der Figur 2a aufweisen. Dadurch kann der gesamte, durch die einzelnen Stege 15 der Lamellenbleche mit dem ersten Blechschnitt 21 gebildete Querschnitt reduziert werden.

Der Steg 15 weist eine Außenkante auf, die nicht über die Höhe hinausweist, die der Höhe H_{Polrand} des Polrandes (bezogen auf die Rotorachse) entspricht. Die Breite B_{Steg} des Stegs 15 in radialer Richtung (in Richtung der Höhe) ist zwar möglichst klein gewählt, muss jedoch zur Gewährleistung der Stabilität des damit aufgebauten Rotors eine Mindestbreite aufweisen.

Die Breite B_{Steg} des Stegs 15 verringert im aufgebauten Rotor die mögliche Breite B_{Magnet} des in die Tasche 7 einzusetzenden Permanentmagneten 8. Die verringerte Breite B_{Magnet} hat zur Folge, dass der von dem Permanentmagneten 8 erzeugte magnetische Fluss des Rotors 5 ebenfalls reduziert ist. Die in Speichenanordnung anzuordnenden Permanentmagnete 8 weisen somit als Abmessung eine Breite B_{Magnet} auf, bei der ihr bezüglich der Rotorachse nach außen, d. h. in Richtung des Stators 2, weisendes Ende unterhalb der Höhe H_{Polrand} (tangentiale Richtung) des Polrandes endet. Das heißt der Abstand derjenigen Kante des Permanentmagneten 8, die in Richtung des Stators 2 gerichtet ist, ist größer als der Abstand des Polrands vom Stator 2.

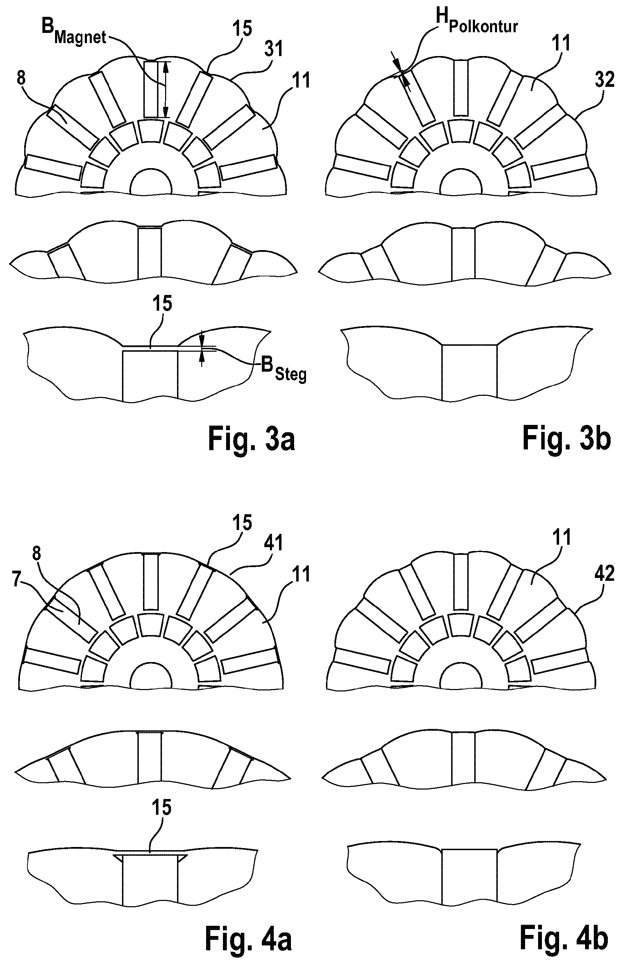

Um zu ermöglichen, dass die Breite B_{Magnet} der Permanentmagneten 8 in radialer Richtung nicht durch das Vorsehen des Stegs 15 verringert werden muss, wird gemäß der Ausführungsform, die durch die Blechschnitte 31, 32 der Figuren 3a und 3b dargestellt ist, vorgeschlagen, dass der erste Blechschnitt 31 der Figur 3a Polkonturen mit einer verringerten Polkonturhöhe H_{Polkontur} aufweist, wobei die maximale Polhöhe H_{Pol} des ersten Blechschnitts 31 im Wesentlichen der maximalen Polhöhe H_{Pol} des zweiten Blechschnitts 32 entspricht. Mit anderen Worten ist beim ersten Blechschnitt 31 die Höhe H_{Polrand} der Polränder der Rotorpolstrukturen 11 gegenüber der Höhe der Polränder H_{Polrand} des zweiten Blechschnitts 32 erhöht, so dass die Stege 15 zwischen den eigentlichen Polkonturen in radialer Richtung nach außen über die Polränder hinaus versetzt sind. Dadurch, dass nur ein Teil der Blechlamellen mit dem ersten Blechschnitt 31 zum Aufbau des Rotors 5 vorgesehen werden, wird der Effekt der Polkontur, die Rastmomente zu verringern, nur unwesentlich beeinträchtigt. Weiterhin ist es jedoch möglich, Permanentmagnete 8 zwischen den Rotorpolen 12 vorzusehen, deren dem Stator 2 zugewandte Kante nicht unterhalb des Polrands, sondern an diesem endet.

In einer weiteren in den Figuren 4a und 4b gezeigten Ausführungsform, die durch die Blechschnitte 41, 42 dargestellt wird, wird deutlich, dass der erste Blechschnitt 41 im Wesentlichen keine Polkontur mehr zeigt bzw. eine gegenüber der Polkonturhöhe H_{Polkontur} der Rotorpolstrukturen 11 des zweiten Blechschnitts 42 deutlich verminderte Polkonturhöhe H_{Polkontur} aufweist. Der in den Taschen 7 angeordnete Permanentmagnet 8 kann in diesem Fall sogar über die Höhe des Polrands H_{Polrand} in Richtung des Stators 2 hinausragen und somit aufgrund seines größeren Volumens einen gegenüber den Ausführungsformen der Figuren 3a und 3b vergrößerten magnetischen Fluss bereitstellen.

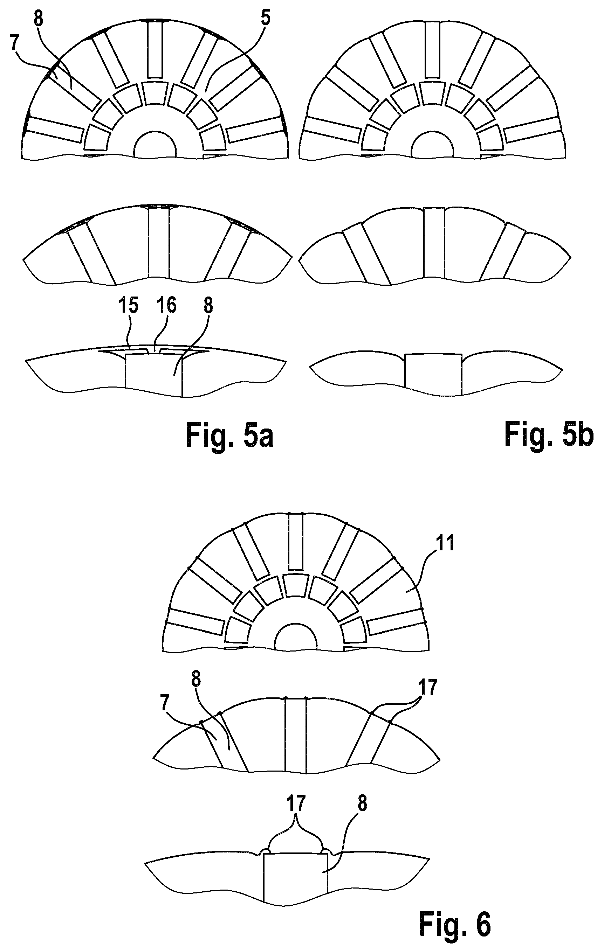

Die Ausführungsform der Figuren 5a und 5b, die durch den ersten und den zweiten Blechschnitt 51, 52 dargestellt wird, sieht weiterhin vor, die Breite des Stegs 15 weiter zu reduzieren, um einen verringerten Querschnitt für den unerwünschten magnetischen Fluss zwischen den Rotorpolen 12 zu schaffen. Wird ein Permanentmagnete 8 vorgesehen, die nicht bis an den Steg 15 heranragt, so kann zwischen dem Steg 15 und einer entsprechenden dem Steg 15 zugewandten Kante des Permanentmagneten 8 ein Stützelement 16 vorgesehen sein, das den Permanentmagnet 8 in der Tasche 7 des Rotors 5 gegen Verschieben fixiert. Das Stützelement 16 kann als Haltenase insbesondere mittig (bezüglich der tangentialen Richtung) an dem Steg 15 angeordnet sein.

Das als Haltenase ausgebildete Stützelement 16 kann weiterhin mit einer gegenüber der tangentialen Breite des Permanentmagneten 8 reduzierten Breite ausgebildet sein. Bei dieser Ausführungsform kann die Blechlamelle des ersten Blechschnitts eine dem Stator 2 zugeordnete Außenkante aufweisen, die im Wesentlichen kreisförmig ist, d. h. keine Konturierung für die Polkontur aufweist.

In einer alternativen Ausführungsform, die durch den Blechschnitt 61 der Figur 6 dargestellt ist, können anstelle von Stegen zwischen den Rotorpolstrukturen 11 an den Polrändern Rastnasen 17 als Halteelemente vorgesehen sein. Die Rastnasen 17 können in vergleichbarer Weise wie die Stege 15 die Permanentmagnete 8 über die nach außen gerichteten Kanten der Permanentmagnete 8 übergreifen und dadurch in den Taschen 7 fixieren. Dabei werden die Rastnasen 17 mit den dem Stator 2 zugewandten Kanten der Permanentmagnete 8, die bezüglich der Rotorachse an den Polrändern oder oberhalb der Polränder enden, gehalten. Dadurch kann auf das Vorsehen von Stegen vollständig verzichtet werden.

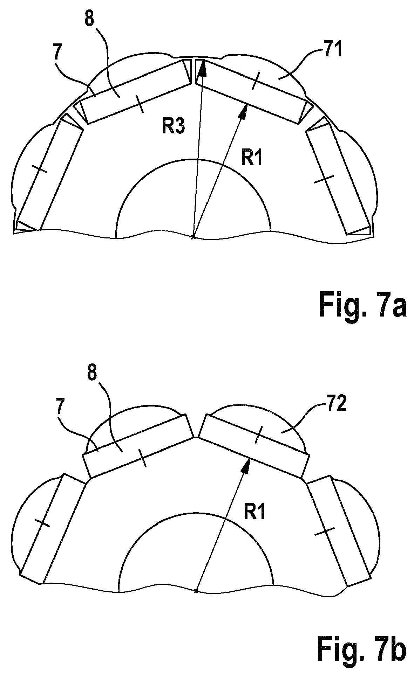

In den Figuren 7a und 7b ist eine weitere Ausführungsform durch einen ersten und einen zweiten Blechschnitt 71, 72 dargestellt. Diese Ausführungsform dient zum Aufbau eines Rotors 5, bei dem eine Anordnung der Permanentmagnete 8 vorgesehen ist, deren Magnetrichtungen jeweils in Richtung des Stators 2 ausgerichtet ist. Man erkennt auch hier, dass der erste Blechschnitt 71 eine gegenüber dem zweiten Blechschnitt 72 verringerte Höhe der Polkontur der Polstruktur 9 aufweist, so dass eine größere tangentiale Breite der in die Taschen 7 des Rotors einzusetzenden Permanentmagneten 8 vorgesehen sein kann.

Die Idee der Erfindung wurde in verschiedenen Ausführungsformen anhand einer Innenläufermaschine dargestellt. Selbstverständlich ist der Erfindungsgedanke auch auf Außenläufermaschinen oder sonstige mit Permanentmagneten zu versehende Maschinenkomponenten anwendbar. Das Prinzip der Erfindung ist weiterhin auch auf translatorische elektrische Maschinen übertragbar.

Weiterhin lässt sich die Idee der verschiedenen Blechschnitte mit verschiedenen Polkonturhöhen unabhängig von der Anzahl der Rotorpole und der Anzahl der Statorzähne realisieren.

## Patentansprüche

1. Maschinenkomponente (5) für eine elektrische Maschine (1), wobei die Maschinenkomponente (5) einen Komponentenkörper mit benachbarten Polbereichen (9) aufweist, die jeweils eine Polkontur (12) aufweisen,
wobei sich die Polbereiche (9) jeweils in einer tangentialen Richtung zwischen zwei Polrändern erstrecken, die der Richtung der Anordnung der benachbarten Polbereiche (9) entspricht, wobei die Polkonturen (12) sich in einer radialen Richtung erstrecken;
wobei zwischen den benachbarten Polbereichen (9) ein oder mehrere Halteelemente (15, 17) zum Halten eines Permanentmagneten (8) vorgesehen sind, wobei der Komponentenkörper eine Tasche (7) zur Aufnahme eines Permanentmagneten (8) aufweist, die in der radialen Richtung zwischen den benachbarten Polbereichen (9) angeordnet ist und durch das eine oder die mehreren Halteelemente begrenzt ist, wobei die Tasche (7) mit einem Permanentmagneten (8) versehen ist,
**dadurch gekennzeichnet, dass**
das eine oder die mehreren Halteelemente (15, 17) von mindestens einem der einander zugewandten Polränder der benachbarten Polbereiche (9) in der radialen Richtung abstehen,
wobei eine Kante des Permanentmagneten (8) an dem einen oder den mehreren Haltelementen (15, 17) anliegt, wobei ein Rand des Permanentmagneten (8) an dem Polrand endet oder über eine Höhe des Polrandes hinausragt.

2. Maschinenkomponente (5) nach Anspruch 1, wobei der Komponentenkörper aus Lamellenblechen mit einem ersten und einem zweiten Blechschnitt (31, 32; 41, 42; 51, 52; 61; 71, 72) zusammengesetzt ist,
wobei das Lamellenblech mit dem zweiten Blechschnitt (32; 42; 52; 72) eine Polstruktur zum Bilden des Polbereichs (9) mit der entsprechenden Polkontur (12) aufweist,
wobei die Lamellenbleche mit dem ersten Blechschnitt (31; 41; 51; 61; 71) benachbarte Polstrukturen aufweisen, zwischen denen eine Struktur zum Bilden der einen oder der mehreren Halteelemente (15, 17) vorgesehen ist.

3. Maschinenkomponente (5) nach Anspruch 2, wobei das Halteelement (15, 17) des Lamellenblechs mit dem zweiten Blechschnitt (32; 42; 52; 72) als Steg (15) zwischen den die Polbereiche (9) bildenden Polstrukturen ausgebildet ist.

4. Maschinenkomponente (5) nach Anspruch 3, wobei an dem Steg (15) ein in Richtung der Tasche (7) abstehendes Stützelement (16) vorgesehen ist.

5. Maschinenkomponente (5) nach Anspruch 2, wobei die Halteelemente (15, 17) des Lamellenblechs mit dem zweiten Blechschnitt (32; 42; 52; 72) als Rastnasen (17) an den einander zugewandten Polrändern benachbarter die Polbereiche (9) bildender Polstrukturen ausgebildet sind.

6. Maschinenkomponente (5) nach einem der Ansprüche 1 bis 5, wobei die Maschinenkomponente einem Läufer (5) einer elektrischen Maschine (1), insbesondere einem Rotor einer Innenläufermaschine, entspricht.

7. Elektrische Maschine (1) mit einer Maschinenkomponente (5) nach einem der Ansprüche 1 bis 6.

## Claims

1. Machine component (5) for an electrical machine (1), wherein the machine component (5) has a component body with adjacent pole regions (9) which each have a pole contour (12),
wherein the pole regions (9) each extend in a tangential direction between two pole edges, the said direction corresponding to the direction of the arrangement of the adjacent pole regions (9), wherein the pole contours (12) extend in a radial direction; wherein one or more holding elements (15, 17) for holding a permanent magnet (8) are provided between the adjacent pole regions (9), wherein the component body has a pocket (7) for receiving a permanent magnet (8), the said pocket being arranged in the radial direction between the adjacent pole regions (9) and being delimited by the one or the plurality of holding elements, wherein the pocket (7) is provided with a permanent magnet (8),
**characterized in that**
the one or the plurality of holding elements (15, 17) protrude from at least one of the mutually facing pole edges of the adjacent pole regions (9) in the radial direction,
wherein a border of the permanent magnet (8) bears against the one or the plurality of holding elements (15, 17), wherein an edge of the permanent magnet (8) ends at the pole edge or protrudes beyond a height of the pole edge.

2. Machine component (5) according to Claim 1, wherein the component body is composed of metal laminate sheets with a first and a second lamination (31, 32; 41, 42; 51, 52; 61; 71, 72),
wherein the metal laminate sheet with the second lamination (32; 42; 52; 72) has a pole structure for forming the pole region (9) with the corresponding pole contour (12),
wherein the metal laminate sheets with the first lamination (31; 41; 51; 61; 71) have adjacent pole structures between which a structure for forming the one or the plurality of holding elements (15, 17) is provided.

3. Machine component (5) according to Claim 2, wherein the holding element (15, 17) of the metal laminate sheet with the second lamination (32, 42; 52; 72) is in the form of a web (15) between the pole structures which form the pole regions (9).

4. Machine component (5) according to Claim 3, wherein a supporting element (16) which projects in the direction of the pocket (7) is provided on the web (15).

5. Machine component (5) according to Claim 2, wherein the holding elements (15, 17) of the metal laminate sheet with the second lamination (32; 42; 52; 72) are in the form of latching lugs (17) on the mutually facing pole edges of adjacent pole structures which form the pole regions (9).

6. Machine component (5) according to one of Claims 1 to 5, wherein the machine component corresponds to a rotor (5) of an electrical machine (1), in particular to a rotor of an internal-rotor machine.

7. Electrical machine (1) comprising a machine component (5) according to one of Claims 1 to 6.

## Revendications

1. Composant de machine (5) destiné à une machine électrique (1), dans lequel le composant de machine (5) comporte un corps de composant ayant des régions polaires adjacentes (9) qui présentent respectivement un contour de pôle (12),
dans lequel les contours polaires (9) s'étendent respectivement dans une direction tangentielle entre les bords des pôles, laquelle direction correspond à la direction d'agencement des régions polaires adjacentes (9), dans lequel les contours des pôles (12) s'étendent dans une direction radiale ;
dans lequel il est prévu entre les régions polaires adjacentes (9) un ou plusieurs éléments de maintien (15, 17) destinés à maintenir un aimant permanent (8), dans lequel le corps de composant comporte une poche (7) destinée à recevoir un aimant permanent (8), qui est disposée dans la direction radiale entre les régions polaires adjacentes (9) et qui est délimitée par lesdits un ou plusieurs éléments de maintien, dans lequel la poche (7) est munie d'un aimant permanent (8), et
**caractérisé en ce que** lesdits un ou plusieurs éléments de maintien (15, 17) sont écartés d'au moins l'un des bords de pôles opposés des régions polaires adjacentes (9) dans la direction radiale,
dans lequel un côté de l'aimant permanent (8) est disposé sur lesdits un ou plusieurs éléments de maintien (15, 17), dans lequel un bord de l'aimant permanent (8) se termine au niveau du bord de pôle ou dépasse d'une certaine hauteur du bord du pôle.

2. Composant de machine (5) selon la revendication 1, dans lequel le corps de composant se compose de tôles feuilletées ayant une première et une seconde parties de tôle (31, 32 ; 41, 42 ; 51, 52 ; 61 ; 71, 72),
dans lequel la tôle feuilletée présente, avec la seconde partie de tôle (32 ; 42 ; 52 ; 72), une structure de pôle destinée à former la région polaire (9) ayant le contour de pôle (12) correspondant,
dans lequel les tôles feuilletées présentent, avec la première partie de tôle (31 ; 41 ; 51 ; 61 ; 71) des structures de pôles adjacentes entre lesquelles est disposée une structure destinée à former lesdits un ou plusieurs éléments de maintien (15, 17).

3. Composant de machine (5) selon la revendication 2, dans lequel l'élément de maintien (15, 17) de la tôle feuilletée est réalisé, en association avec la seconde partie de tôle (32 ; 42 ; 52 ; 72), sous la forme d'une âme (15) entre les structures de pôles formant les régions polaires (9).

4. Composant de machine (5) selon la revendication 3, dans lequel il est prévu sur la lame (15) un élément de support (16) écarté dans la direction de la poche (7).

5. Composant de machine (5) selon la revendication 2, dans lequel les éléments de maintien (15, 17) de la tôle feuilletée, en association avec la seconde partie de tôle (32 ; 42 ; 52 ; 72), sont réalisés sous la forme d'ergots d'encliquetage (17) sur les structures de pôles formant les bords de pôles opposés adjacents des régions polaires (9).

6. Composant de machine (5) selon l'une quelconque des revendications 1 à 5, dans lequel le composant de machine correspond à un rotor (5) d'une machine électrique (1), notamment à un rotor d'une machine à rotor intérieur.

7. Machine électrique (1) comportant un composant de machine (5) selon l'une quelconque des revendications 1 à 6.
